# DEMANDE DE BREVET EUROPEEN

(11) **EP 1 103 335 A1**
(43) Date de publication de la demande: **30.05.2001**
(21) Numéro de dépôt: 00403250.4
(22) Date de dépôt: 21.11.2000
(51) Int. Cl.: B23K 26/00, B23K 26/02

(54) **Dispositif formant tête optique pour diriger un faisceau laser sur la surface à traiter d'une paroi d'une pièce, telle qu'un cylindre de moteur à combustion interne**

(30) Priorité: 23.11.1999 FR 9914725
(71) Demandeur: Process Conception Ingenierie S.A., 92190 Meudon (FR)
(72) Inventeur: Gillet, Bernard, 78990 Elancourt (FR)
(74) Mandataire: Berger, Helmut

(57) **Abrégé**

La présente invention concerne un dispositif formant tête optique pour diriger un faisceau laser sur la surface à traiter d'une paroi d'une pièce, telle qu'un cylindre de moteur à combustion interne.

Le dispositif est caractérisé en ce que le miroir plan (2) de réflexion du faisceau laser est fixé au corps (3) de la tête optique de façon à diriger le faisceau laser sur la surface à traiter (S) suivant un angle d'attaque incliné par rapport à un plan perpendiculaire à la paroi (1a) de la pièce (1) et à l'axe longitudinal du corps (3) pour éviter le retour du faisceau laser sur le miroir (2).

L'invention trouve application dans l'usinage de précision de cylindres de moteurs à combustion interne.

## Description

La présente invention concerne un dispositif formant tête optique pour diriger un faisceau laser sur la surface à traiter d'une paroi d'une pièce, telle qu'un cylindre de moteur à combustion interne.

Un tel dispositif a pour but d'effectuer une opération de finition des surfaces internes des cylindres du bloc moteur afin d'assurer le compromis entre l'étanchéité et le grippage de la chambre de combustion de chaque cylindre tout au long de la course du piston à l'intérieur de celui-ci.

Ces dispositifs connus comprennent chacun un miroir disposé à l'intérieur du cylindre de manière à diriger le faisceau laser vers la surface de la paroi du cylindre, le miroir étant disposé sur un support fixe ou motorisé et incliné d'un angle de 45° de façon à renvoyer le faisceau laser provenant de la source laser vers la paroi de l'alésage du cylindre suivant un angle de 90°.

Cependant, l'inclinaison à 45° du faisceau laser a pour inconvénient que le faisceau est réfléchi par la surface interne de la paroi du cylindre suivant le même trajet optique que le faisceau laser incident, de sorte que le faisceau réfléchi est renvoyé vers la buse et le miroir de renvoi généralement situés à la partie inférieure du corps de la tête optique. Cette réflexion est associée à une projection de plasma et de vapeur qui ont pour conséquence de polluer les composants optiques du dispositif.

La présente invention a pour but d'éliminer l'inconvénient ci-dessus en proposant un dispositif formant tête optique pour diriger un faisceau laser sur la surface à traiter d'une paroi d'une pièce, telle qu'un cylindre de moteur à combustion interne, comprenant un miroir incliné de réflexion du faisceau laser, fixé au corps de la tête optique et qui est caractérisé en ce que le miroir est fixé au corps de la tête optique de façon à diriger le faisceau laser sur la surface à traiter suivant un angle d'attaque incliné par rapport à un plan perpendiculaire à la paroi de la pièce et à l'axe longitudinal du corps de la tête optique pour éviter le retour du faisceau laser sur le miroir.

De préférence, le miroir est logé dans une bague annulaire fixe de calage agencée pour orienter le miroir de façon à diriger le faisceau laser suivant l'angle d'attaque précité.

La bague de calage comprend une paroi annulaire dont la face sur laquelle vient en appui le miroir est inclinée par rapport à l'axe de révolution de la bague de calage.

La bague de calage est fixée dans un support généralement cylindrique solidaire du corps de la tête optique.

Avantageusement, le miroir est un miroir plan.

En outre, le dispositif comprend un refroidisseur fixé dans le support cylindrique en étant en appui sur la face postérieure du miroir opposée à sa face antérieure réfléchissante.

Le refroidisseur est fixé dans le support cylindrique par un écrou serrant axialement successivement le refroidisseur et le miroir sur la face inclinée d'appui de la bague de calage.

Le refroidisseur comprend des moyens d'indexation de celui-ci par rapport au support du miroir tandis que ce support est orienté par rapport au corps de la tête optique par des moyens d'indexation permettant également d'orienter la bague de calage à la position angulaire relative souhaitée du miroir de renvoi.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective avec coupe partielle du dispositif formant tête optique de l'invention pour traiter, par un faisceau laser, la surface interne d'un cylindre de moteur à combustion interne ;
- la figure 2 représente le dispositif formant tête optique de la figure 1 avec les différents composants optiques de celui-ci représentés en vue éclatée ;
- la figure 3 est une vue agrandie en coupe longitudinale du dispositif formant tête optique de la figure 1 ; et
- la figure 4 est une vue en coupe suivant la ligne IV-IV de la figure 3.

En se reportant aux figures, le dispositif formant tête optique permettant de diriger un faisceau laser sur la surface interne S à traiter d'une paroi la d'un cylindre 1 de moteur à combustion interne, comprend un miroir plan 2 fixé au corps 3 de la tête optique en partie inférieure de celle-ci de façon à renvoyer le faisceau laser F, provenant d'une source laser (non représentée) et traversant le corps 3 suivant l'axe longitudinal de celui-ci, vers la surface interne S.

Selon l'invention, le miroir 2 est orienté relativement au corps 3 de façon à renvoyer le faisceau laser F vers la surface S suivant une valeur d'angle d'attaque ou d'incidence a qui est incliné par rapport à un plan perpendiculaire à la paroi la et à l'axe longitudinal du corps 3, valeur telle que le faisceau F1 réfléchi par la surface S n'empreinte pas à nouveau le trajet optique du faisceau incident F.

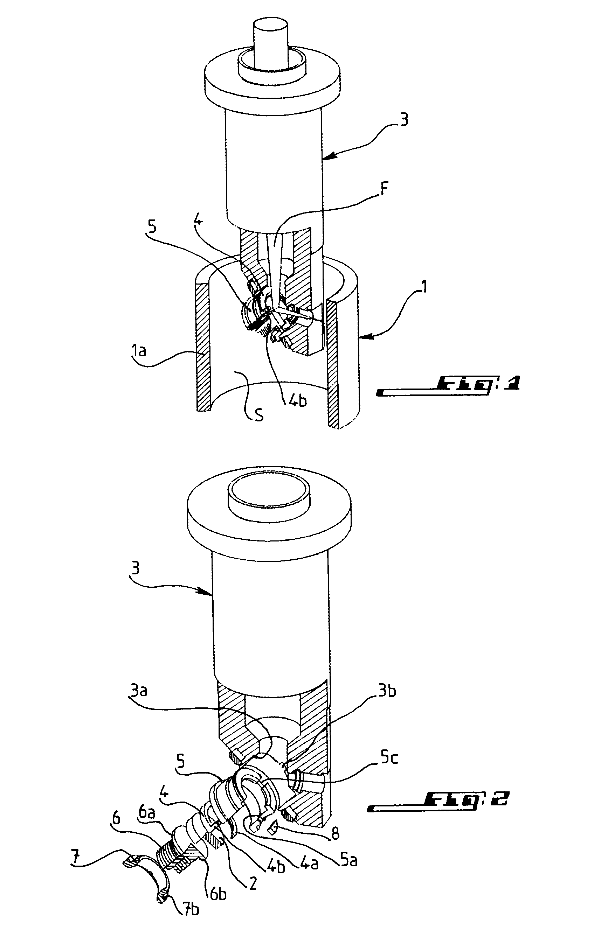

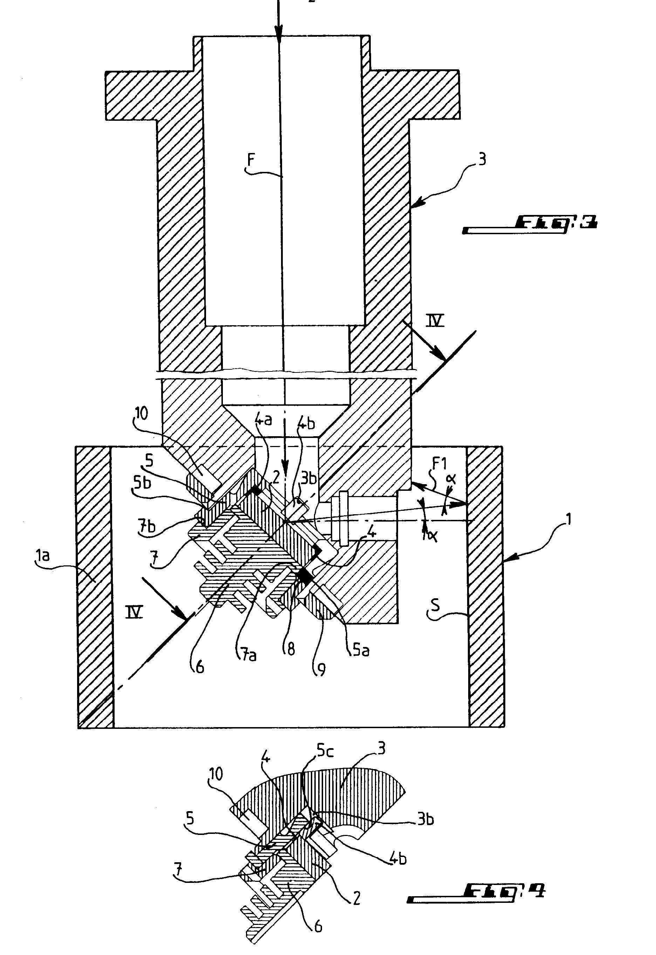

A cet effet, le miroir plan 2 est logé dans une bague annulaire fixe de calage 4 qui comprend une paroi annulaire 4a usinée de telle façon que la face de cette paroi sur laquelle vient en appui le miroir plan 2 soit inclinée par rapport à l'axe de révolution de la bague de calage 4. Ainsi, comme le montre clairement la figure 3, la paroi annulaire 4a de la bague 4 a une épaisseur supérieure à sa partie diamétralement opposée. Bien entendu, cette différence d'épaisseur est telle qu'elle définit l'angle α d'incidence de faisceau laser F sur la surface à traiter S.

La bague de calage 4 est logée dans un support généralement cylindrique 5 fixé dans un alésage oblique 3a de la partie inférieure du corps 3 de la tête optique et qui est orienté angulairement relativement à cette partie par des moyens d'indexation comme on le verra ultérieurement.

Une pièce de refroidissement 6 est également en partie logée dans le support 5 en ayant une face extrême plane inclinée en appui sur la face postérieure du miroir plan 2 opposée à la face antérieure de réflexion de celui-ci. La pièce de refroidissement 6, le miroir plan 2 et la bague de calage 4 sont successivement fixés de façon serrée les uns sur les autres dans le support 5 par un écrou cylindrique tubulaire 7 dont une extrémité est en appui sur une collerette 6a de la pièce de refroidissement 6 et l'extrémité externe comporte un épaulement 7b en appui sur la face annulaire extrême du support 5. En outre, la pièce de refroidissement 6 est orientée relativement au miroir plan 2, de façon que sa face plane inclinée puisse venir en appui sur la face postérieure correspondante du miroir plan 2, par une clavette 8 en forme de coin logée dans une rainure 5a du support 5 de telle façon que la face plane de la clavette 8 soit en appui sur un méplat 6b de la pièce de refroidissement 6 et sa face arquée opposée soit en appui sur une portion de surface interne arquée correspondante de l'alésage 3a dans lequel est fixé le support 5.

Le support 5 est en appui, par un épaulement 5b sur une rondelle 9 en appui sur une face plane oblique de la partie inférieure du corps 3 de la tête optique et qui définit dans celle-ci une chambre de refroidissement 10.

La bague de calage 4 comporte des moyens d'indexation constitués par deux barrettes diamétralement opposés 4b solidaires de la bague en étant perpendiculaires au plan contenant celle-ci et s'engageant respectivement dans deux rainures opposées radialement internes 5c du support 5 et deux rainures diamétralement opposées 3b usinées dans l'alésage 3a du corps 3 en s'étendant axialement parallèlement à l'axe de l'alésage oblique 3a. Ces moyens d'indexation permettant d'orienter angulairement le support 5 relativement au corps 3 et la bague de calage 4 relativement au support 5 pour placer le miroir 2 à sa position souhaitée de réflexion du faisceau laser.

Ainsi, lors du démontage du miroir plan 2 pour un éventuel nettoyage, les moyens d'indexation ci-dessus décrits permettent de repositionner le support 5, la bague de calage 4 et la pièce de refroidissement 6 à leur position d'origine de telle façon que le miroir plan 2 puisse réfléchir à nouveau le faisceau laser suivant l'angle d'incidence a au travers de la lentille ou base de focalisation du faisceau sur la surface à traiter S.

L'inclinaison du miroir plan 2 selon l'invention permet de réfléchir le faisceau laser F1 sur la surface interne d'une pièce à traiter suivant un angle α égal à l'angle α d'incidence du faisceau sur cette surface, de sorte que la réflexion du faisceau incident sur la surface à traiter s'effectuera en dehors de l'axe optique. Dans ces conditions, aucune projection de plasma et de vapeur n'est à craindre et les composants optiques du dispositif ne seront pas pollués. Le processus d'usinage de précision des surfaces internes d'alésages de cylindres d'un moteur à combustion interne sera alors beaucoup plus fiable.

Bien entendu, si l'on souhaite changer l'angle d'inclinaison du miroir plan, il suffit de remplacer la bague de calage par une autre bague de calage ayant une paroi annulaire radialement interne dont la face sur laquelle vient en appui le miroir aura une inclinaison différente de la face d'appui de la paroi annulaire radialement interne de la précédente bague de calage.

## Revendications

1. Dispositif formant tête optique pour diriger un faisceau laser sur la surface à traiter d'une paroi d'une pièce, telle qu'un cylindre de moteur à combustion interne, comprenant un miroir incliné (2) de réflexion du faisceau laser (F) fixé au corps (3) de la tête optique, caractérisé en ce que le miroir (2) est fixé au corps (3) de la tête optique de façon à diriger le faisceau laser (F) sur la surface à traiter (S) suivant un angle d'attaque incliné par rapport à un plan perpendiculaire à la paroi (la) de la pièce (1) et à l'axe longitudinal du corps (3) de la tête optique pour éviter le retour du faiscau laser sur le miroir (2) et en ce que le miroir (2) est logé dans une bague annulaire fixe de calage (4) agencée pour orienter le miroir (2) de façon à diriger le faisceau laser suivant l'angle d'attaque précité.

2. Dispositif selon la revendication 1, caractérisé en ce que la bague de calage (4) comprend une paroi annulaire radialement interne dont la face sur laquelle vient en appui le miroir (2) est inclinée par rapport à l'axe de révolution de la bague de calage (4).

3. Dispositif selon la revendication 1 ou 2, caractérisé en ce que la bague de calage (4) est fixée dans un support généralement cylindrique (5) solidaire du corps (3) de la tête optique.

4. Dispositif selon l'une des revendications 1 à 3, caractérisé en ce que le miroir (2) est un miroir plan.

5. Dispositif selon la revendication 3 ou 4, caractérisé en ce qu'il comprend un refroidisseur (6) fixé dans le support cylindrique (5) en étant en appui sur la face postérieure de miroir (2) opposée à sa face antérieure réfléchissante.

6. Dispositif selon la revendication 5, caractérisé en ce que le refroidisseur (6) est fixé dans le support cylindrique (5) par un écrou (7) serrant axialement successivement le refroidisseur (6), le miroir plan (2) et la bague de calage (4).

7. Dispositif selon la revendication 5 ou 6, caractérisé en ce que le refroidisseur (6) comprend des moyens (6b, 8) d'indexation de celui-ci par rapport au support (5) du miroir (2).

8. Dispositif selon l'une des revendications 3 à 7, caractérisé en ce que le support (5) du miroir (2) est orienté par rapport au corps (3) de la tête optique par des moyens d'indexation (4b, 5c, 3b) permettant également d'orienter la bague de calage (4) à la position angulaire relative souhaitée du miroir de renvoi (2).
